(19) Europäisches Patentamt
European Patent Office
Office européen des brevets

(11) **EP 4 572 073 A1**

(12) **DEMANDE DE BREVET EUROPEEN**

(43) Date de publication:
**18.06.2025   Bulletin 2025/25**

(21) Numéro de dépôt: **24218812.6**

(22) Date de dépôt: **10.12.2024**

(51) Classification Internationale des Brevets (IPC):
**H02J 3/38** (2006.01)      **G06Q 50/06** (2024.01)

(52) Classification Coopérative des Brevets (CPC):
**H02J 3/381; G06Q 50/06;** H02J 2300/24;
H02J 2310/12

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **11.12.2023   FR 2313930**

(71) Demandeur: **DELTA DORE
35270 Bonnemain (FR)**

(72) Inventeur: **LEDUC, Benoit
35270 BONNEMAIN (FR)**

(74) Mandataire: **Cabinet Le Guen Maillet
3, impasse de la Vigie
CS 71840
35418 Saint-Malo Cedex (FR)**

(54) **PROCEDE ET DISPOSITIF DE GESTION DE L ENERGIE ELECTRIQUE PRODUITE PAR AU MOINS UN PANNEAU PHOTOVOLTAIQUE**

(57)     L'invention concerne un procédé et un dispositif de gestion de l'énergie électrique produite par au moins un panneau photovoltaïque dans un bâtiment relié à un réseau de fourniture en énergie électrique, le bâtiment comportant un dispositif consommateur d'énergie électrique, un commutateur et un contrôleur. Selon l'invention, le contrôleur :
- obtient (E33) des informations représentatives de la capabilité du réseau,
- commande (E34, E35) le commutateur pour que l'énergie électrique fournie par le au moins un panneau photovoltaïque soit délivrée au dispositif consommateur d'énergie électrique pendant une période donnée en fonction de l'information représentative de la capabilité du réseau.

Fig. 3

EP 4 572 073 A1

**Description**

DOMAINE TECHNIQUE

La présente invention concerne un procédé et un dispositif de gestion de l'énergie électrique produite par au moins un panneau photovoltaïque.

ETAT DE LA TECHNIQUE ANTERIEURE

L'amortissement de l'investissement dans une installation de panneaux photovoltaïques est en général de l'ordre d'une dizaine d'années selon les usages et la localisation de

l'installation. Le profit économique ne peut donc être l'unique argument déclencheur pour l'investissement dans une telle installation. De plus en plus de personnes sont sensibles aux problématiques environnementales et souhaitent contribuer à la transition vers des sources d'énergie plus propres. L'installation de panneaux photovoltaïques est un moyen concret de prendre part à cette transition.

D'autre part, la tendance au remplacement des chaudières à gaz par des pompes à chaleur, ainsi que celui des véhicules thermiques par des véhicules électriques induit une augmentation de la demande d'électricité et des pics de consommation sur le réseau en période de pointe. Pour pallier ces pics de consommation, il est fait recours à une production d'électricité à partir de produits carbonés tels que des centrales qui produisent de l'énergie électrique à partir de gaz ou de charbon.

La production d'électricité à partir de produits carbonés varie en fonction de l'heure de la journée (par exemple il est plus carboné à 19h qu'à 3h du matin), du jour de la semaine (il est moins carboné le week-end) et de la saison (il est plus carboné en hiver).

Il faut noter que l'équivalent en $CO_2$ pour produire un kWh d'électricité doit intégrer les importations, et les pertes sur le réseau.

L'énergie électrique fournie par les panneaux photovoltaïques est directement liée à l'ensoleillement, il est parfois difficile d'assurer l'autonomie complète en énergie électrique d'un bâtiment avec des panneaux photovoltaïques.

Il est notamment souhaitable de fournir une solution qui permette aux personnes disposant de panneaux photovoltaïques de contribuer à une réduction de la production d'électricité à partir de produits carbonés et qui dans certains cas, garantissent un retour sur investissement à long terme des panneaux photovoltaïques.

EXPOSE DE L'INVENTION

Il est proposé un procédé de gestion de l'énergie électrique produite par au moins un panneau photovoltaïque dans un bâtiment relié à un réseau de fourniture en énergie électrique, le bâtiment comportant un dispositif consommateur d'énergie électrique, un commutateur et un contrôleur, caractérisé en que le procédé comporte les étapes de :

- obtention, par le contrôleur, d'informations représentatives de la capabilité du réseau, la capabilité du réseau correspondant à la capacité du réseau c'est-à-dire le pourcentage de puissance encore disponible du réseau de fourniture en énergie électrique par rapport à une puissance maximale définie selon un critère favorisant la puissance maximale de l'énergie renouvelable sur le territoire du réseau de fourniture en énergie électrique ou la puissance maximale produite sur le territoire hors importation,
- commande par le contrôleur du commutateur pour que l'énergie électrique fournie par le au moins un panneau photovoltaïque soit délivrée au dispositif consommateur d'énergie électrique pendant une période donnée en fonction de l'information représentative de la capabilité du réseau.

L'invention concerne aussi un dispositif de gestion de l'énergie électrique produite par au moins un panneau photovoltaïque dans un bâtiment relié à un réseau de fourniture en énergie électrique, le bâtiment comportant un dispositif consommateur d'énergie électrique, un commutateur et un contrôleur, caractérisé en que le dispositif de gestion comporte :

- des moyens d'obtention, par le contrôleur, d'informations représentatives de la capabilité du réseau, la capabilité du réseau correspondant à la capacité du réseau c'est-à-dire le pourcentage de puissance encore disponible du réseau de fourniture en énergie électrique par rapport à une puissance maximale définie selon un critère favorisant la puissance maximale de l'énergie renouvelable sur le territoire du réseau de fourniture en énergie électrique ou la puissance maximale produite sur le territoire hors importation,
- des moyens de commande par le contrôleur du commutateur pour que l'énergie électrique fournie par le au moins un panneau photovoltaïque soit délivrée au dispositif consommateur d'énergie électrique pendant une période donnée en fonction de l'information représentative de la capabilité du réseau.

Ainsi, le dispositif de gestion permet de répartir de manière optimisée l'énergie entre le réseau de fourniture en énergie et le dispositif consommateur d'énergie électrique.

En outre, il est possible de déterminer la puissance maximale en fonction des caractéristiques de la demande d'électricité sur le réseau de fourniture en énergie électrique, de l'intérêt des utilisateurs ou d'adapter cette puissance maximale selon les contraintes environnementales ou d'infrastructure ; le procédé est opérationnel quel que soit le type de référence qui sera utilisée.

Selon un mode de réalisation particulier, le procédé comporte en outre l'étape de commande par le contrôleur du commutateur pour que l'énergie électrique fournie par le au moins un panneau photovoltaïque soit délivrée au réseau de fourniture en énergie électrique si la capabilité du réseau est inférieure à un premier seuil prédéterminé et en ce que la commande par le contrôleur du commutateur pour que l'énergie électrique fournie par le au moins un panneau photovoltaïque soit délivrée au dispositif consommateur d'énergie électrique pendant une période donnée en fonction de l'information représentative de la capabilité du réseau est immédiate ou est effectuée lors d'un intervalle de temps prédéterminé.

Ainsi, le procédé permet d'augmenter la cohérence des commandes par rapport à l'état du réseau de fourniture en énergie électrique, afin par exemple, de ne pas augmenter la charge sur le réseau de fourniture en énergie électrique pour favoriser l'autoconsommation d'énergie fournie par au moins un panneau photovoltaïque à un moment inopportun au regard de l'état du réseau de fourniture en énergie électrique.

Selon un mode de réalisation particulier, l'intervalle de temps est compris entre 1 heure et 24 heures ou entre une journée et une semaine.

Ainsi, cet intervalle permet d'assurer une charge optimale au regard de la capabilité du réseau et des usages du dispositif consommateur d'énergie électrique, ainsi que de l'horizon des données nécessaires à la prise de décision.

Selon un mode de réalisation particulier, la commande du commutateur pour que l'énergie électrique fournie par le au moins un panneau photovoltaïque soit délivrée au dispositif consommateur d'énergie électrique pendant la période donnée en fonction de l'information représentative de la capabilité du réseau est effectuée en comparant un rapport entre une puissance électrique délivrée par le réseau Res divisée par une puissance de fonctionnement du dispositif consommateur d'énergie électrique au rapport entre la capacité du réseau à un premier instant divisée par la capacité du réseau à un second instant compris dans l'intervalle de temps prédéterminé.

Ainsi, ce mode de réalisation permet de comparer deux instants pour lesquels les caractéristiques du réseau sont différentes en y intégrant aussi les caractéristiques de production du au moins un panneau photovoltaïque.

Selon un mode de réalisation particulier, la capabilité du réseau est déterminée à partir de différentes tarifications pour une consommation électrique d'énergie du réseau.

Ainsi, ce mode de réalisation permet d'obtenir des informations représentatives de la charge du réseau de fourniture en énergie électrique sans avoir recours à un serveur.

Il est également proposé un programme d'ordinateur qui peut être stocké sur un support et/ou téléchargé d'un réseau de communication, afin d'être lu par un processeur. Ce programme d'ordinateur comprend des instructions pour implémenter le procédé réalisé par une passerelle internet, tel que mentionné ci-dessus, lorsque ledit programme est exécuté par le processeur. L'invention concerne également un support de stockage d'informations stockant un tel programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] représente un exemple d'architecture d'un système de fourniture en énergie électrique d'un bâtiment dans lequel la présente invention est implémentée ;
[Fig. 2] illustre schématiquement un exemple d'agencement matériel d'un contrôleur selon la présente invention ;
[Fig. 3] illustre un premier exemple d'un algorithme de gestion de l'énergie électrique fournie par au moins un panneau photovoltaïque ;
[Fig. 4] illustre un second exemple d'un algorithme de gestion de l'énergie électrique fournie par au moins un panneau photovoltaïque.

EXPOSE DETAILLE DE MODES DE REALISATION

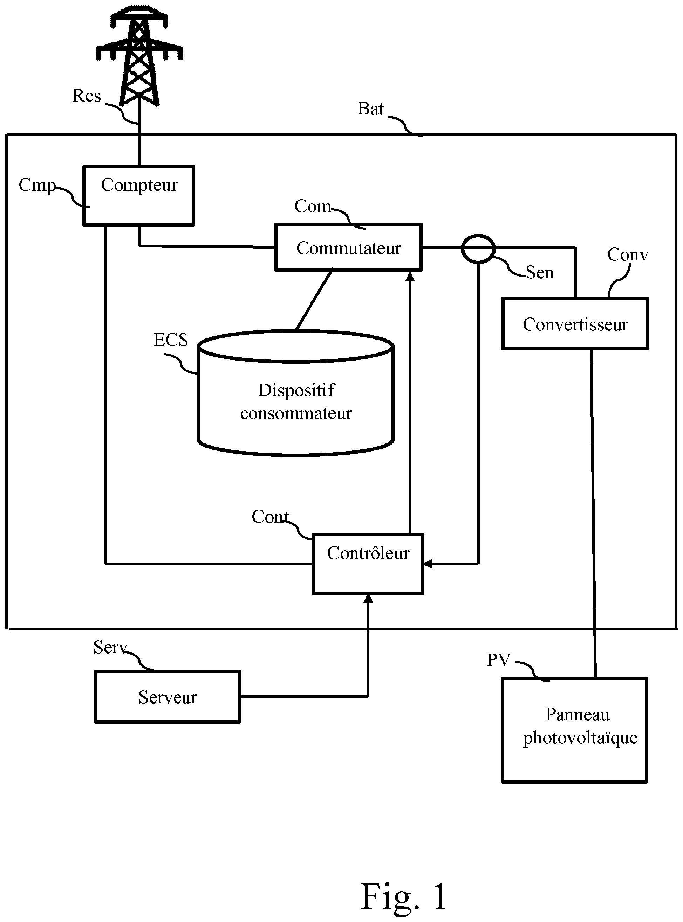

La Fig. 1 représente un exemple d'architecture d'un système de fourniture en énergie électrique d'un bâtiment

dans lequel la présente invention est implémentée.

Le bâtiment Bat comprend au moins un panneau photovoltaïque PV, un convertisseur Conv, un capteur de puissance Sen délivrée par le panneau photovoltaïque PV, un commutateur Com, un contrôleur Cont et un compteur électrique intelligent Cmp.

Le convertisseur Conv convertit l'énergie électrique continue délivrée par au moins un panneau photovoltaïque en un signal alternatif 230V identique au signal alternatif délivré par un réseau Res de fourniture en énergie électrique.

Le signal alternatif délivré par le réseau Res de fourniture en énergie électrique est délivré au compteur intelligent Cmp pour être retransmis au commutateur Com.

Le compteur intelligent Cmp est par exemple relié au contrôleur Cont afin de fournir des informations de tarification telles que par exemple une tarification en heure creuse ou en heure pleine. En variante, les informations de tarification sont saisies par l'occupant du bâtiment ou obtenues d'un serveur distant.

Le commutateur Com est commandé par le contrôleur Cont.

Le contrôleur Cont est relié au capteur de puissance électrique Sen et par exemple à un serveur Serv de données distant.

Le serveur Serv comporte des données représentatives de la consommation en énergie électrique pour l'ensemble ou une partie du réseau de fourniture en énergie électrique et permet en particulier au contrôleur Cont de déterminer quand la production d'électricité à partir de produits carbonés est ou sera importante.

Un exemple de service et données fournis par le serveur Serv est disponible aux adresses suivantes : :https:// data.rte-france.com/catalog/-/api/consumption/Consumption/V1.2 ou httts://data.rte-France.com/eco2mix ou https//www.monecowatt.fr.

Le commutateur Com est relié à un dispositif ECS consommateur d'énergie électrique. Le dispositif ECS est par exemple un ballon d'eau chaude. Le ballon d'eau chaude permet de stocker de l'énergie pour une utilisation ultérieure

Le dispositif ECS est par exemple un équipement de climatisation ou de ventilation, un équipement électroménager à cycle (lave-linge, ...) ou un véhicule électrique.

Il est à remarquer ici que la puissance moyenne des installations photovoltaïques installées chez des particuliers est, en France, de l'ordre de 3 kW ce qui a pour conséquence que la puissance fournie par les panneaux photovoltaïques est souvent en dessous de la puissance de la résistance (2kW) du ballon d'eau chaude à effet Joule et nécessite un complément fourni par le réseau de fourniture en énergie électrique.

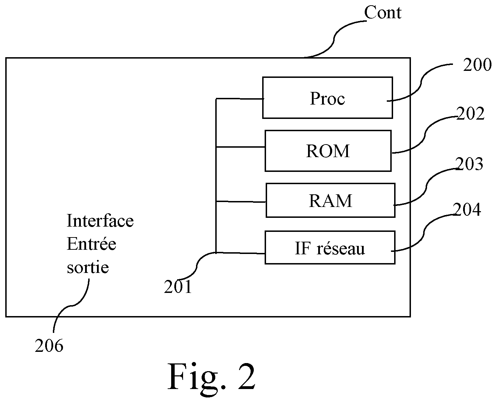

La Fig. 2 illustre schématiquement un exemple d'agencement matériel d'un contrôleur selon la présente invention.

Le contrôleur Cont comporte, reliés par un bus de communication 201 : un processeur Proc 200 ; une mémoire vive RAM (« Random Access Memory » en anglais) 203 ; une mémoire morte ROM (« Read Only Memory » en anglais) 202 ou une mémoire Flash et une interface réseau 204.

Le processeur Proc 200 est capable d'exécuter des instructions chargées dans la mémoire RAM 203 à partir de la mémoire ROM 202, d'une mémoire externe (telle qu'une carte SD), d'un support de stockage (tel que le disque dur HDD), ou d'un réseau de communication. Lors de la mise sous tension du contrôleur Cont, le processeur Proc 200 est capable de lire dans la mémoire RAM 203 des instructions et de les exécuter. Ces instructions forment un programme d'ordinateur causant la mise en oeuvre, par le processeur Proc 200, de tout ou partie des comportements, algorithmes et étapes décrits ici. Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le contrôleur Cont comporte de la circuiterie électronique adaptée et configurée pour implémenter les comportements, algorithmes et étapes décrits ici.

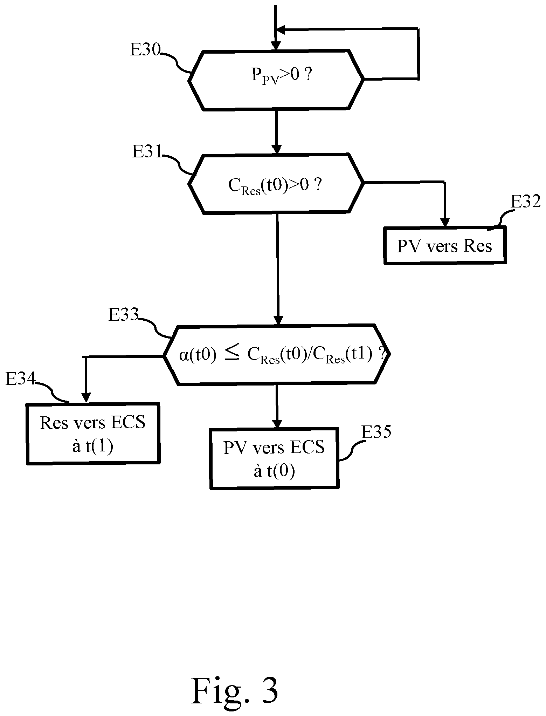

La Fig. 3 illustre un premier exemple d'un algorithme de gestion de l'énergie électrique fournie par au moins un panneau photovoltaïque.

L'algorithme est exécuté par le contrôleur Cont.

A l'étape E30, le contrôleur Cont obtient une mesure de la puissance délivrée par au moins un panneau photovoltaïque PV et vérifie si celle-ci est non nulle.

Dans l'affirmative, le contrôleur Cont passe à l'étape E31.

A l'étape E31, le contrôleur Cont obtient du serveur Serv une valeur de la capabilité du réseau $C_{Res}$. La capabilité du réseau $C_{Res}$ est la proportion de puissance encore disponible. Plus la capabilité du réseau $C_{Res}$ est faible, plus l'énergie consommée à la production de l'électricité a une teneur en carbone importante. La capabilité obtenue à cette étape est notée $C_{Res}(t0)$.

Le paramètre $C_{Res}$ correspond à la capacité du réseau c'est-à-dire le pourcentage de puissance $P_{disponible\_réseau}$ encore disponible par rapport à une puissance maximale $P_{MAX}$ qui peut être définie selon les critères à favoriser (puissance maximale de l'énergie « verte » disponible sur le territoire, puissance maximale produite sur le territoire hors importation qu'elles soient internationales ou régionales, etc.) Pour simplifier on considère que $P_{MAX}$ est un paramètre statique qui ne dépend pas du temps. En réalité, ce paramètre peut dépendre du temps ; par exemple lorsqu'il s'agit de la puissance maximale d'énergie « verte » disponible. Cette valeur dépend de l'irradiance de la journée, de la météorologie et donc du temps. $P_{MAX}$ peut ainsi être variable en fonction du temps pour peu qu'il soit possible d'avoir une estimation de ce paramètre pour une fenêtre temporelle.

A cette même étape, le contrôleur Cont vérifie si la valeur de la capabilité du réseau $C_{Res}$ est supérieure à 0.

Si la capabilité du réseau $C_{Res}$ est supérieure à 0, le contrôleur Cont passe à l'étape E33. Dans la négative, le contrôleur Cont passe à l'étape E32.

A l'étape E32, le contrôleur Cont commande le commutateur Com pour que l'énergie produite par le au moins un panneau photovoltaïque soit injectée dans le réseau Res.

A l'étape E33, le contrôleur Cont vérifie si $I(t0) \leq I(t1)$, avec $I(t)$ impact de la charge du dispositif ECS à l'instant t, équivalent à $a(t0) \leq C_{Res}(t0) / C_{Res}(t1)$.

On considère 2 instants : l'instant courant t0 au moment où l'algorithme est exécuté et un instant futur t1 auquel pourrait être réalisée la charge considérée. Pour l'évaluation, on considère que l'instant t1 est un moment favorable pour la charge. Par exemple, à partir de la prédiction de la consommation totale du territoire à l'instant t1 fourni par le serveur Serv, on peut déterminer l'instant t1 où la capabilité du réseau est maximale. L'écart maximum entre t1 et t0 dépend de l'usage.

Par exemple, la charge du dispositif ECS est effectuée sur une fenêtre temporelle de t0 à t0+ 3 jours. Mais, dans le cas où le dispositif ECS est un ballon d'eau chaude, il convient de s'assurer que les utilisateurs ne manquent pas d'eau chaude au terme des 3 jours. On peut tenir le même raisonnement avec le véhicule électrique. De manière pratique, on a une durée pouvant être comprise entre 1 et 24 heures ou entre une journée et une semaine. Pour chaque instant on évalue l'impact de l'énergie consommée sur le réseau de la manière suivante :

On pose : $a(t) = P_{réseau}(t) / P_{ECS}$ soit : $P_{réseau}(t) = a(t)* P_{ECS}$ où $P_{ECS}$ est la puissance de fonctionnement du dispositif ECS et $P_{réseau}(t)$ est la puissance électrique délivrée par le réseau Res.

$I(t) = P_{éseau}(t) / P_{disponible\_réseau}(t) = \alpha(t) * P_{ECS} / (C_{Res}(t) \times P_{MAX})$ où $P_{disponible\_réseau}(t)$ est la puissance disponible du réseau à l'instant t0, avec apport du au moins un panneau photovoltaïque PV, c'est-à-dire que $a(t0) \neq 1$ :

$$I(t0) = \alpha(t0) \text{ x } P_{ECS} / (C_{Res}(t0) \text{ x } P_{MAX}),$$

Pour t1, sans apport du au moins un panneau photovoltaïque PV, c'est-à-dire que $a(t0) = 1$ : :

$$I(t1) = P_{ECS} / (C_{Res}(t1) \text{ x } P_{MAX})$$

Il s'agit ensuite de comparer $I(t0)$ et $I(t1)$ et de décider l'instant de charge t0 et t1, en fonction de la valeur maximale.

On charge à t0 si $I(t0) \leq I(t1)$, $a(t0) \leq C_{Res}(t0) / C_{Res}(t1)$, le contrôleur Cont passe à l'étape E35. Dans la négative, le processeur 200 passe à l'étape E34.

A l'étape E34, le contrôleur Cont commande le commutateur Com pour que l'énergie fournie par le réseau soit injectée dans le dispositif ECS à l'instant t1.

A l'étape E35, le contrôleur Cont commande le commutateur Com pour que l'énergie produite par le au moins un panneau photovoltaïque soit injectée dans le dispositif ECS à l'instant t0.

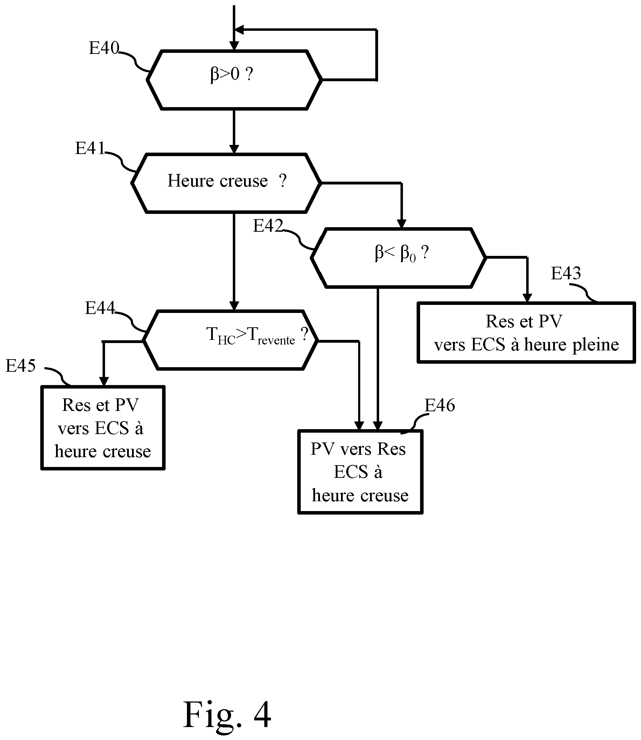

La Fig. 4 illustre un second exemple d'un algorithme de gestion de l'énergie électrique fournie par au moins un panneau photovoltaïque.

Dans le second exemple de réalisation, il est considéré que la mesure de capabilité du réseau en faisant l'hypothèse que la tarification de l'énergie délivrée par le réseau Res ou de l'énergie produite par le au moins un panneau photovoltaïque et transférée au réseau Res est une fonction inversement proportionnelle à la capabilité du réseau Res.

Certains équipements photovoltaïques ne peuvent fournir la totalité de l'énergie électrique nécessaire à un réchauffement complet d'un dispositif ECS lorsque celui-ci est un ballon d'eau chaude.

Une manière d'augmenter l'autoconsommation est d'associer à l'énergie produite par le au moins un panneau photovoltaïque l'énergie électrique délivrée par le réseau Res. Ceci induit néanmoins une augmentation du coût de réchauffement de l'eau du ballon d'eau chaude.

Cela est d'autant plus vrai si la charge correspond à une portion faible de l'énergie PV disponible par jour. Ceci dépend directement de l'usage qui est fait de l'eau chaude sanitaire le matin, avant les apports solaires de la journée.

Dit autrement, lorsque l'autorisation de charge est donnée dès que l'énergie fournie par le au moins un panneau photovoltaïque est disponible, une portion importante de l'énergie utilisée provient du réseau Res. Si la durée de charge est courte parce que le volume d'eau utilisé depuis la dernière charge complète (effectuée la nuit précédente) est peu élevé, une proportion importante de l'énergie sera fournie par le réseau Res; ce qui aura un impact sur le coût de la charge puisque le tarif de l'électricité provenant du réseau à ce moment de la journée est dans la majorité des cas défavorable par rapport au tarif de nuit (notons tout de même que certaines offres proposent des tarifs abaissés sur une plage horaire le midi). Dans le pire des cas, si la puissance fournie des panneaux photovoltaïques PV dépasse tout juste la puissance nécessaire pendant la charge du ballon d'eau chaude, l'énergie est quasiment entièrement fournie par le réseau à un tarif qui dans la majorité des offres est supérieur au tarif de nuit. Ce qui reviendrait à charger le ballon en heures pleines au lieu de le charger en heures creuses.

Le présent algorithme vise néanmoins à permettre de réchauffer l'eau d'un ballon d'eau chaude en partie à partir de l'énergie fournie par le au moins un panneau photovoltaïque. On peut définir deux coûts « instantanés » en fonction du moment où est réalisé le chauffage de l'eau du ballon d'eau chaude :

En heures pleines avec un apport PV :

$C_{S\_PV}$ : coût avec seuil pour le déclenchement de la commande ; il s'agit de la somme du coût de l'énergie fournie par le réseau Res et du coût de l'énergie fournie par le au moins un panneau photovoltaïque PV que l'on considère nul.

$$C_{S\_PV} = E_{ECS} \times T = E_{RESEAU\_HP} . T_{HP} + E_{PV} \times T_{PV} = E_{RESEAU\_HP} . T_{HP}$$

$$C_{S\_PV} = (P_{ECS} - P_S) \times T_{HP} \times dt$$

En heures creuses sans panneau photovoltaïque PV
$C_{HC}$ : coût avec charge ECS en heures creuses

$$C_{HC} = E_{ECS} \times T_{HC} = \beta \times E_{ECS} \times T_{HP}$$

$$C_{HC} = \beta \times P_{ECS} \times T_{HP} \times dt$$

Avec :

$E_{ECS}$ : énergie nécessaire pour la charge du ballon d'eau chaude ;
$E_{PV}$ : énergie provenant du au moins un panneau photovoltaïque PV ;
$E_{RESEAU}$ : énergie provenant du réseau Res ;
$T_{PV}$ : tarif PV, $T_{PV} = 0$ ;
$T_{HC}$ : tarif heures creuses ;
$T_{HP}$ : tarif heures pleines ;
On pose : $T_{HC} = \beta . T_{HP}$ et $\beta$ compris entre 0 et 1
Ps est déterminé pour que $C_{S\_PV} < C_{HC}$
$(P_{ECS} - P_S) \times T_{HP} \times dt < \beta \times P_{ECS} \times T_{HP} \times dt$

$$(P_{ECS} - P_S) < \beta \times P_{ECS}$$

$$P_S > (1 - \beta) \times P_{ECS}$$

En intégrant le prix de revente de la production PV, on peut établir 3 coûts différents en fonction des conditions.

1er cas :

On charge le ballon d'eau chaude ECS avec la production du au moins un panneau photovoltaïque PV à la puissance produite par le panneau photovoltaïque PV ($\beta . P_{ECS}$) et le complément d'énergie est fourni par le réseau. Le tarif en cours est HC (Heures creuses) pour l'énergie fournie par le réseau.

Le coût de la charge avec la production du panneau photovoltaïque PV sur une période tarifaire HC peut s'écrire :

$$C_{PV\_HC} = C_{PV} + C_{réseau\_HC} = \beta . P_{ECS} \times T_{PV} + (1-\beta) . P_{ECS} \times T_{HC}$$

Comme $T_{PV} = 0$, on a :

$$C_{PV\_HC} = (1-\beta)xP_{ECS}xT_{HC}$$

Avec :

$C_{PV\_HC}$ : Coût (instantanée de la charge par la production du panneau photovoltaïque PV complémentée par le réseau Res au tarif HC en fonction de $\beta$).
$C_{PV}$ : Coût de la charge par la production du panneau photovoltaïque PV, nul puisqu'on considère que la production du panneau photovoltaïque PV est gratuite.
$C_{réseau\_HC}$ : Coût du complément fourni par le réseau au tarif HC en fonction de $\beta$.
$P_{ECS}$ : Puissance nominale du ballon
$T_{PV}$ : Prix de la production PV [euros/kWh], $T_{PV} = 0$
$T_{HC}$ : Tarif en heures creuses [euros/kWh]

$2^{ème}$ cas :

On charge le ballon ECS avec la production PV à la puissance produite par le panneau photovoltaïque PV ($\beta.P_{ECS}$). Le tarif en cours est HP (heures pleines) pour l'énergie fournie par le réseau.
De manière similaire au premier cas, on peut établir le coût de la charge :

$$C_{PV\_HP} = (1-\beta)xP_{ECS}xT_{HP}$$

Avec :

$C_{PV\_HP}$ : Coût (instantanée de la charge par la production du panneau photovoltaïque PV complémentée par le réseau Res au tarif HP en fonction de $\beta$).
$P_{ECS}$ : Puissance nominale du ballon [kW]
$T_{HP}$ : Tarif en heures pleines [euros/kWh]

$3^{ème}$ cas :

Le chauffage de l'eau du ballon d'eau chaude ECS est réalisé pendant des périodes tarifaires HC. L'énergie fournie par le panneau photovoltaïque PV est revendue sur le réseau au tarif appliqué à l'instant t.
On peut écrire le coût de la charge dans ces conditions :

$$C_{REV\_PV} = C_{HC} - Prix\_revente\_PV = P_{ECS}xT_{HC} - \beta.P_{ECS}xT_{REVENTE}$$

Avec :

$$Prix\_revente\_PV = \beta \times P_{ECS} \times T_{REVENTE}$$

$C_{REV\_PV}$ : Coût de la charge en période tarifaire HC avec revente de la production du panneau photovoltaïque PV
$P_{ECS}$ : Puissance nominale du ballon [kW]
$T_{REVENTE}$ : Tarif de revente de l'électricité produite par le panneau photovoltaïque PV [euros/kWh]
$T_{HP}$ : Tarif en heures pleines [euros/kWh]

A l'étape E40, le contrôleur Cont vérifie si la variable $\beta$ est positive.
Dans l'affirmative, le contrôleur Cont passe à l'étape E41.
A l'étape E41, le contrôleur Cont vérifie si l'on est en tarification heure creuse. Dans l'affirmative, le contrôleur Cont passe à l'étape E44. Dans la négative, le contrôleur Cont passe à l'étape E42.
A l'étape E42, le contrôleur Cont vérifie si la variable $\beta$ est inférieure à une variable $\beta_0$ où $\beta_0$-($T_{HP}$ - $T_{HC}$) / ($T_{HP}$ - $T_{REVENTE}$).
Dans l'affirmative, le contrôleur Cont passe à l'étape E46. Dans la négative, le contrôleur Cont passe à l'étape E43.
A l'étape E42, le contrôleur Cont commande le commutateur Com pour que l'énergie produite par le au moins un panneau photovoltaïque et l'énergie délivrée par le réseau Res soient injectées dans le dispositif ECS pendant les heures pleines.

A l'étape E44, le contrôleur Cont vérifie si le tarif en heure creuse est supérieur au tarif de revente de l'énergie produite par le au moins un panneau photovoltaïque.

Dans l'affirmative, le contrôleur Cont passe à l'étape E45. Dans la négative, le contrôleur Cont passe à l'étape E46.

A l'étape E45, le contrôleur Cont commande le commutateur Com pour que l'énergie produite par le au moins un panneau photovoltaïque et l'énergie délivrée par le réseau Res soient injectées dans le dispositif ECS pendant les heures creuses.

A l'étape E46, le contrôleur Cont commande le commutateur Com pour que l'énergie produite par le au moins un panneau photovoltaïque soit délivrée au réseau Res et que le dispositif ECS soit alimenté en énergie électrique fournie par le réseau Res pendant les heures creuses.

**Revendications**

1. Procédé de gestion de l'énergie électrique produite par au moins un panneau photovoltaïque dans un bâtiment relié à un réseau de fourniture en énergie électrique, le bâtiment comportant un dispositif consommateur d'énergie électrique, un commutateur et un contrôleur, **caractérisé en ce que** le procédé comporte les étapes de :

   - obtention (E33), par le contrôleur, d'informations représentatives de la capabilité du réseau, la capabilité du réseau correspondant à la capacité du réseau c'est-à-dire le pourcentage de puissance encore disponible du réseau de fourniture en énergie électrique par rapport à une puissance maximale définie selon un critère favorisant la puissance maximale de l'énergie renouvelable sur le territoire du réseau de fourniture en énergie électrique ou la puissance maximale produite sur le territoire hors importation,
   - commande (E34, E35) par le contrôleur du commutateur pour que l'énergie électrique fournie par le au moins un panneau photovoltaïque soit délivrée au dispositif consommateur d'énergie électrique pendant une période donnée en fonction de l'information représentative de la capabilité du réseau.

2. Procédé selon la revendication 1, **caractérisé en ce que** le procédé comporte en outre l'étape de commande par le contrôleur du commutateur pour que l'énergie électrique fournie par le au moins un panneau photovoltaïque soit délivrée au réseau de fourniture en énergie électrique si la capabilité du réseau est inférieure à un premier seuil prédéterminé et **en ce que** la commande par le contrôleur du commutateur pour que l'énergie électrique fournie par le au moins un panneau photovoltaïque soit délivrée au dispositif consommateur d'énergie électrique pendant une période donnée en fonction de l'information représentative de la capabilité du réseau est immédiate ou est effectuée lors d'un intervalle de temps prédéterminé.

3. Procédé selon la revendication 2, **caractérisé en ce que** l'intervalle de temps est compris entre 1 heure et 24 heures ou entre une journée et une semaine.

4. Procédé selon l'une quelconque des revendications 2 à 3, **caractérisé en ce que** la commande du commutateur pour que l'énergie électrique fournie par le au moins un panneau photovoltaïque soit délivrée au dispositif consommateur d'énergie électrique pendant la période donnée en fonction de l'information représentative de la capabilité du réseau est effectuée en comparant un rapport entre une puissance électrique délivrée par le réseau Res divisée par une puissance de fonctionnement du dispositif consommateur d'énergie électrique au rapport entre la capacité du réseau à un premier instant divisée par la capacité du réseau à un second instant compris dans l'intervalle de temps prédéterminé.

5. Dispositif de gestion de l'énergie électrique produite par au moins un panneau photovoltaïque dans un bâtiment relié à un réseau de fourniture en énergie électrique, le bâtiment comportant un dispositif consommateur d'énergie électrique, un commutateur et un contrôleur, caractérisé en que le dispositif de gestion comporte :

   - des moyens d'obtention, par le contrôleur, d'informations représentatives de la capabilité du réseau, la capabilité du réseau correspondant à la capacité du réseau c'est-à-dire le pourcentage de puissance encore disponible du réseau de fourniture en énergie électrique par rapport à une puissance maximale définie selon un critère favorisant la puissance maximale de l'énergie renouvelable sur le territoire du réseau de fourniture en énergie électrique ou la puissance maximale produite sur le territoire hors importation,
   - des moyens de commande par le contrôleur du commutateur pour que l'énergie électrique fournie par le au moins un panneau photovoltaïque soit délivrée au dispositif consommateur d'énergie électrique pendant une période donnée en fonction de l'information représentative de la capabilité du réseau.

**6.** Produit programme d'ordinateur comportant des instructions pour implémenter, par un processeur, le procédé selon l'une quelconque des revendications 1 à 4, lorsque ledit programme est exécuté par ledit processeur.

**7.** Support de stockage d'informations stockant un programme d'ordinateur comprenant des instructions pour implémenter, par un processeur, le procédé selon l'une quelconque des revendications 1 à 4, lorsque ledit programme est lu et exécuté par ledit processeur.

Res

Bat

Cmp — Compteur

Com — Commutateur

Sen

Conv

Convertisseur

ECS

Dispositif
consommateur

Cont — Contrôleur

Serv — Serveur

PV

Panneau
photovoltaïque

Fig. 1

Cont

Proc — 200

ROM — 202

RAM — 203

IF réseau — 204

Interface
Entrée
sortie

201

206

# Fig. 2

E30 — $P_{PV} > 0$ ?

E31 — $C_{Res}(t0) > 0$ ?

E32 — PV vers Res

E33 — $\alpha(t0) \leq C_{Res}(t0)/C_{Res}(t1)$ ?

E34 — Res vers ECS à t(1)

E35 — PV vers ECS à t(0)

# Fig. 3

E40 β>0 ?

E41 Heure creuse ?

E42 β< $β_0$ ?

E43 Res et PV
vers ECS à heure pleine

E44 $T_{HC}$>$T_{revente}$ ?

E45 Res et PV
vers ECS à
heure creuse

E46 PV vers Res
ECS à
heure creuse

# Fig. 4

Europäisches
Patentamt

European
Patent Office

Office européen
des brevets

# RAPPORT DE RECHERCHE EUROPEENNE

**Numéro de la demande**

EP 24 21 8812

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/003974 A1 (YANG WEIWEI [US] ET AL) 7 janvier 2021 (2021-01-07) * abrégé; figures 23, 28A,28c * * alinéas [0118], [0129] - [0132], [0150], [0168] - [0172] * | 1-3,5-7 | INV. H02J3/38 G06Q50/06 |
| | ----- | | |
| X | WO 2023/030638 A1 (ERICSSON TELEFON AB L M [SE]) 9 mars 2023 (2023-03-09) * abrégé * | 1-3,5-7 | |
| | ----- | | |
| X | US 2014/052310 A1 (BABA AKIRA [JP] ET AL) 20 février 2014 (2014-02-20) * revendications 1-20; figure 1 * | 1-3,5-7 | |
| | ----- | | |
| A | US 2023/387682 A1 (TATEIWA KENJI [JP] ET AL) 30 novembre 2023 (2023-11-30) * revendications 1-22; figure 1 * | 1-7 | |
| | ----- | | |
| A | US 9 671 843 B2 (ELLIS GORDON D [CA]; CANIZARES CLAUDIO ADRIAN [CA] ET AL.) 6 juin 2017 (2017-06-06) * revendications 1-22 * | 1-7 | |
| | ----- | | **DOMAINES TECHNIQUES RECHERCHES (IPC)** H02J G06Q |

Le présent rapport a été établi pour toutes les revendications

| Lieu de la recherche | Date d'achèvement de la recherche | Examinateur |
|---|---|---|
| Munich | 31 mars 2025 | Lorenzo Feijoo, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 572 073 A1**

**ANNEXE AU RAPPORT DE RECHERCHE EUROPEENNE
RELATIF A LA DEMANDE DE BREVET EUROPEEN NO.**

EP 24 21 8812

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2025

| Document brevet cité au rapport de recherche | Date de publication | Membre(s) de la famille de brevet(s) | Date de publication |
|---|---|---|---|
| US 2021003974 A1 | 07-01-2021 | EP 3973607 A1 | 30-03-2022 |
| | | US 2021003974 A1 | 07-01-2021 |
| | | WO 2021002966 A1 | 07-01-2021 |
| WO 2023030638 A1 | 09-03-2023 | EP 4396917 A1 | 10-07-2024 |
| | | US 2024421607 A1 | 19-12-2024 |
| | | WO 2023030638 A1 | 09-03-2023 |
| US 2014052310 A1 | 20-02-2014 | CN 103518301 A | 15-01-2014 |
| | | EP 2701266 A1 | 26-02-2014 |
| | | JP 6202403 B2 | 27-09-2017 |
| | | JP 2012249476 A | 13-12-2012 |
| | | JP 2015195723 A | 05-11-2015 |
| | | US 2014052310 A1 | 20-02-2014 |
| | | WO 2012165153 A1 | 06-12-2012 |
| US 2023387682 A1 | 30-11-2023 | JP 7078183 B1 | 31-05-2022 |
| | | JP WO2022107313 A1 | 27-05-2022 |
| | | US 2023387682 A1 | 30-11-2023 |
| | | WO 2022107313 A1 | 27-05-2022 |
| US 9671843 B2 | 06-06-2017 | CA 2831621 A1 | 04-10-2012 |
| | | US 2014018971 A1 | 16-01-2014 |
| | | WO 2012129675 A1 | 04-10-2012 |

EPO FORM P0460

Pour tout renseignement concernant cette annexe : voir Journal Officiel de l'Office européen des brevets, No.12/82

15